# EUROPÄISCHE PATENTSCHRIFT

(11) **EP 1 547 459 B1**
(45) Veröffentlichungstag und Bekanntmachung des Hinweises auf die Patenterteilung: **27.05.2009**
(21) Anmeldenummer: 04029936.4
(22) Anmeldetag: 17.12.2004
(51) Int. Cl.: A01G 3/00, B02C 18/08

(54) **Messerscheibe mit Reisszähnen für einen Häcksler**
Cutting disk with tearing teeth for a shredder
Disque de coupe avec dents déchirantes pour un broyeur

(30) Priorität: 24.12.2003 DE 20320044 U
(43) Veröffentlichungstag der Anmeldung: 29.06.2005
(73) Patentinhaber: Viking GmbH, 6336 Langkampfen (AT)
(72) Erfinder: Duregger, Georg, 6342 Niederndorf (AT)
(74) Vertreter: Wasmuth, Rolf

(56) Entgegenhaltungen:
- US-A- 3 674 220
- US-A- 4 360 166
- US-A- 4 860 961
- US-A- 5 205 498

## Beschreibung

Die Erfindung betrifft einen Häcksler zum Zerkleinern von organischem Material, insbesondere Gartenhäcksler für Astwerk, Gestrüpp oder dgl. nach dem Oberbegriff des Anspruchs 1.

Derartige Häcksler sind allgemein bekannt (siehe z.B. US-A-3 674 220). Auf einer rotierenden Messerscheibe ist mindestens ein Häckselmesser befestigt, das eine sich etwa in Radialrichtung erstreckende Schneide aufweist und mit einem gehäusefesten Anschlag zusammenwirkt, um in die Messerkammer eingeführtes Material zu zerkleinern. Dabei soll der Häcksler sowohl kleine Äste, Gestrüpp, größere Äste und ähnliches derart zerkleinern, daß das Schnittgut einfach kompostiert werden kann. Dies setzt eine ausreichend feine Zerkleinerung des Schnittgutes voraus.

Der Erfindung liegt die Aufgabe zugrunde, einen gattungsgemäßen Häcksler derart weiterzubilden, daß unabhängig von dem in die Messerkammer eingeschobenen Material eine gleichmäßige, feine Zerkleinerung gewährleistet ist.

Die Aufgabe wird erfindungsgemäß nach den kennzeichnenden Merkmalen des Anspruchs 1 gelöst.

Das im Bereich des Außenumfangs der Messerscheibe angeordnete Reißmesser bewirkt einen Materialschnitt in Drehrichtung der drehenden Messerscheibe, so daß das Schnittgut ca. senkrecht zum Schnitt des nachfolgenden Häckselmessers geschnitten wird. Dadurch ist eine ausreichend feine Zerkleinerung sowohl gestrüppartigen Schnittgutes als auch von feinem und grobem Astwerk und anderem möglich.

Vorteilhaft liegt das Reißmesser in Umfangsrichtung der Messerscheibe ausgerichtet, wobei an der vorlaufenden Kante des Reißmessers eine Frontschneide ausgebildet ist. Zweckmäßig ist ergänzend an der sich in Umfangsrichtung erstreckenden Dachkante des Reißmessers eine Dachschneide ausgebildet, so daß eine gute Zerschnitzelung des Materials gegeben ist.

Das Reißmesser erstreckt sich über die Schnittebene der Häckselmesser hinaus, so daß der Schnitt des Reißmessers tiefer geht als die Schnittebene des Häckselmessers, wodurch ein sauberes Abtrennen eines einzelnen Hackschnitzels von dem zu zerkleinernden Gut gewährleistet ist.

Dem Reißmesser ist - wie dem Häckselmesser - ein gehäusefester Anschlag zugeordnet, mit dem das Messer zusammenwirkt. Der dem Häckselmesser zugeordnete Anschlag und der dem Reißmesser zugeordnete Anschlag sind bevorzugt an einem gemeinsamen Bauteil ausgebildet, wobei das Bauteil vorzugsweise Teil eines Einfülltrichters zur Messerkammer ist.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: eine Draufsicht auf eine erfindungsgemäße Messerscheibe von unten,
- Fig. 2: einen Schnitt längs der Linie II-II in Fig. 1,
- Fig. 3: eine Seitenansicht der Messerscheibe nach Fig. 1,
- Fig. 4: eine perspektivische Ansicht der Messerscheibe nach Fig. 1 von oben,
- Fig. 5: eine perspektivische Ansicht der erfindungsgemäßen Messerscheibe von unten,
- Fig. 6: eine Teildarstellung einer Messerkammer mit darin angeordneter Messerscheibe nach Fig. 1,
- Fig. 7: einen Teilschnitt durch eine Messerkammer nach Fig. 6.

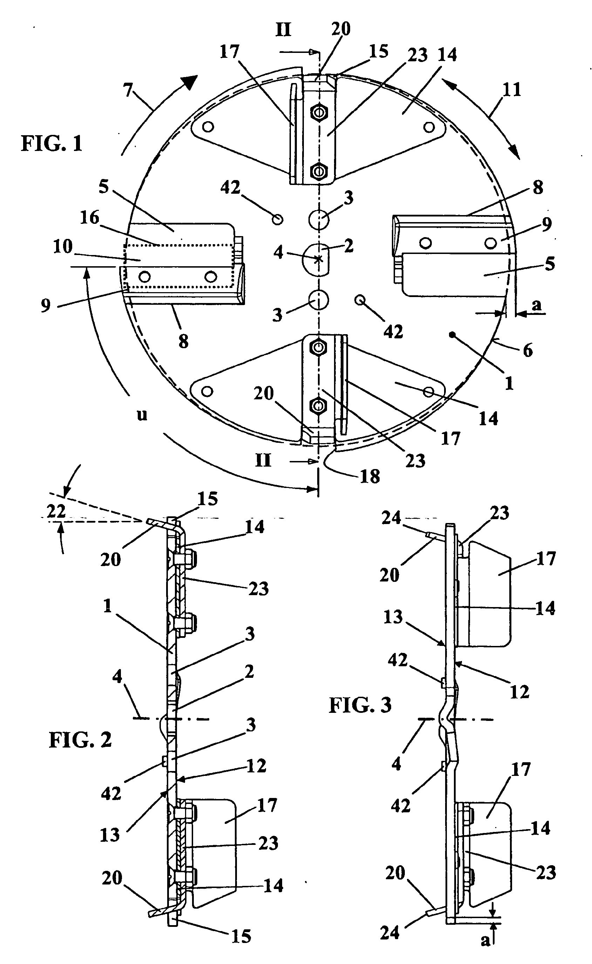

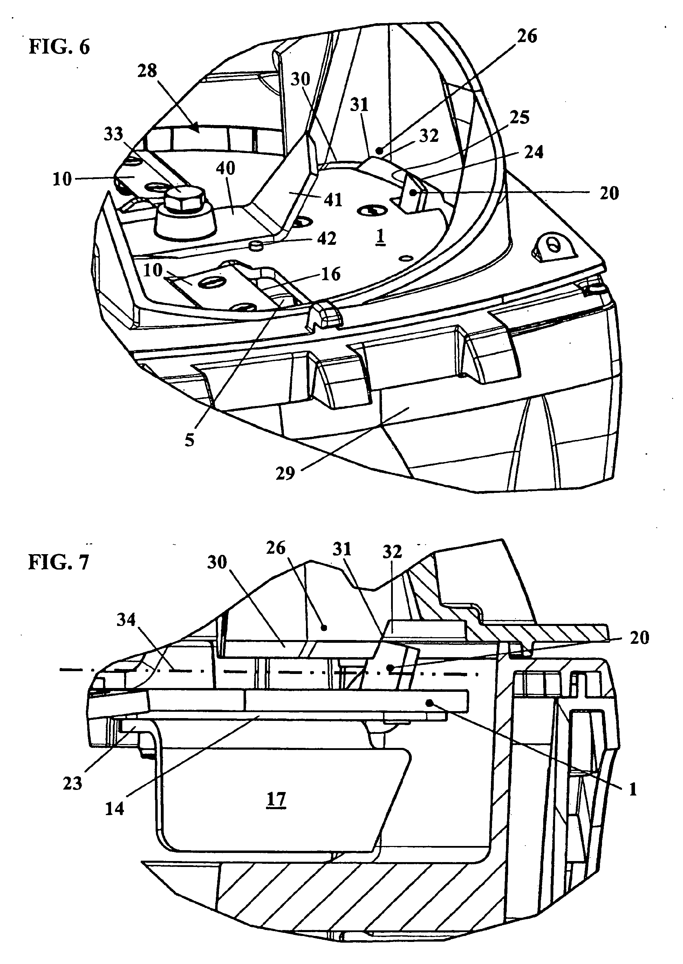

Die in den Fig. 1 bis 5 gezeigte Messerscheibe 1 wird mit einer zentralen Öffnung 2 auf eine nicht näher dargestellte Antriebswelle eines Antriebsmotors drehfest aufgesetzt. Zur Drehmitnahme können weitere Öffnungen 3 vorgesehen sein. Die dargestellte Messerscheibe hat bezogen auf ihre Drehachse 4 einander diametral gegenüberliegende Radialschlitze 5, die zum Umfang 6 der Messerscheibe 1 offen sind. Die in Drehrichtung 7 nachlaufende Kante 8 der Radialschlitze 5 weist eine Messeraufnahme 9 auf, in der ein Häckselmesser 10 mit einer Schneide 16 aufgenommen und befestigt ist. Die Schneiden 16 der Häckselmesser bestimmen eine Schnittebene 34 (Fig. 6).

Die Messerscheibe 1 weist ferner zwei Reißmesser 20 auf, die in Umfangsrichtung 11 mit einem Umfangsabstand u zum jeweiligen Häckselmesser 10 liegen. Die Anordnung ist vorteilhaft so getroffen, daß in Drehrichtung 7 jeweils ein Reißmesser 20 dem Häckselmesser 10 vorläuft. Das Reißmesser 20 liegt bzw. dessen vorlaufende Kante 25 liegt bezogen auf das Häckselmesser 10 etwa an dessen äußeren Flugkreisdurchmesser; vorteilhaft liegt das Reißmessers 20 geringfügig in dem Flugkreisdurchmesser.

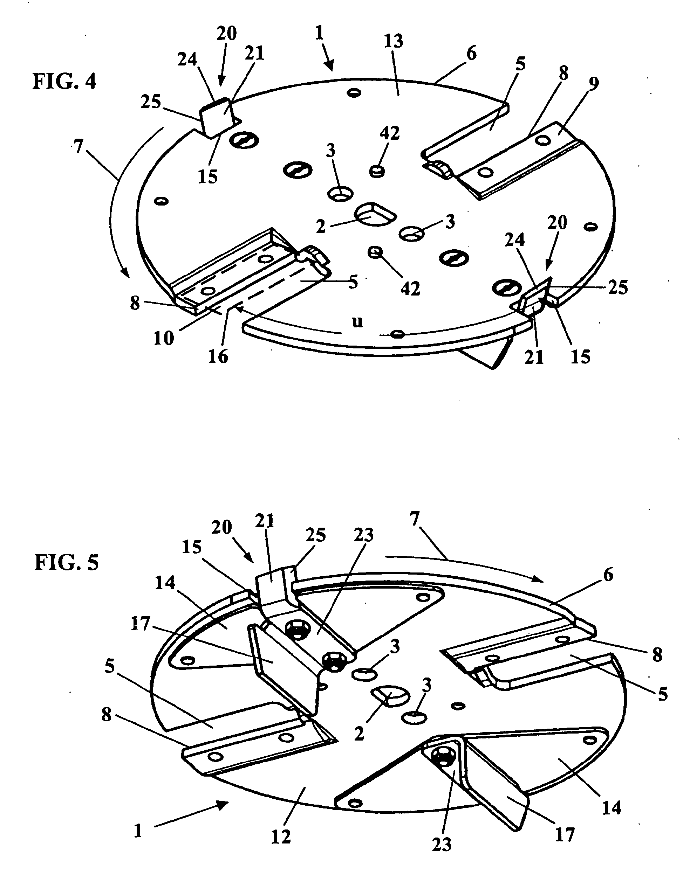

Jedes Reißmesser 20 hat einen Grundkörper 21 (Fig. 4), der - wie die Fig. 2 und 3 zeigen - unter einem Winkel 22 zur Drehachse 4 liegen kann. Das Reißmesser 20 ist mit einem radialen Befestigungsabschnitt 23 auf der Unterseite 12 der Messerscheibe 1 festgelegt, wobei sich der Befestigungsabschnitt 23 etwa radial zur Drehachse 4 und etwa parallel zur Ebene der Messerscheibe 1 erstreckt. Wie die Fig. 1, 2 und 5 zeigen, ist der Befestigungsabschnitt 23 des Reißmessers 20 in einem Bereich auf der Unterseite 12 der Messerscheibe 1 befestigt, in der ein Zusatzblech 14 festgelegt ist. Das Zusatzblech 14 hat eine kreissegmentförmige Form und erstreckt sich etwa symmetrisch zwischen den Radialschlitzen 5, wobei das Zusatzblech 15 nahe dem Außenumfang 6 auf der Unterseite 12 der Messerscheibe 1 festgelegt ist.

Das nach Art eines Reißzahns ausgebildete Reißmesser 20 erstreckt sich am Befestigungsabschnitt 23 von der Unterseite 12 der Messerscheibe 1 durch eine Ausnehmung 15 im Umfangsrand 6 der Messerscheibe 1 hindurch über die Oberseite 13 der Messerscheibe hinaus (Fig. 2, 3), wobei die Dachkante 24 des Reißmessers 20 über die durch die Schneiden 16 der Häckselmesser 10 bestimmte Schnittebene 34 hinausragen. Das Zusatzblech 14 ist dabei bevorzugt ein geräuschdämmendes Blech, welches in Sandwichbauweise auf der Messerscheibe 1 befestigt ist.

Der Grundkörper 21 jedes Reißmessers 20 liegt etwa in Umfangsrichtung 11 der Messerscheibe 1 ausgerichtet, wobei die in Drehrichtung 7 vorlaufende Kante 25 als Frontschneide des Reißmessers 20 ausgebildet ist. Die in Umfangsrichtung 11 ausgerichtet liegende Dachkante 24 des Grundkörpers 21 des Reißmessers 20 kann als Dachschneide ausgebildet sein, die über die Schnittebene der Häckselmesser 10 übersteht. Es kann zweckmäßig sein, auch die nachlaufende Kante des Grundkörpers 21 als Schneide auszubilden.

Wie Fig. 1 zeigt, hat die Messerscheibe 1 einen sägezahnähnlichen Außendurchmesser 6, d.h. am Außenumfang 6 ist mindestens ein oder sind mehrere Höhensprünge a ausgebildet. Der Höhensprung a liegt im Ausführungsbeispiel jeweils im Bereich eines Häckselmessers 10 bzw. eines Reißmessers 20 und ist vorzugsweise durch unterschiedlich lange Radialkanten des einem Messer zugeordneten Radialschlitzes 5 bzw. der Ausnehmung 15 geschaffen. So ist die in Drehrichtung vorlaufende Kante des Radialschlitzes 5 bzw. der Ausnehmung 15 um den Höhensprung a kürzer ausgebildet als die nachlaufende Längskante 8 des Radialschlitzes 5 bzw. die nachlaufende Längskante 18 der zum Außenumfang 6 offenen Ausnehmung 15. Durch diesen geschaffenen Freiwinkel wird gewährleistet, daß Häckselgut, welches sich im Betrieb zwischen dem Außenumfang 6 der Messerscheibe 1 und der Messerkammerinnenwand klemmen kann, bis zur nächsten Kante bzw. bis zum folgenden Messer freigestellt wird.

Am Befestigungsabschnitt 23 des Reißmessers 20 ist ein Räumflügel 17 angeordnet, der - wie die Fig. 2, 3 und 5 zeigen - etwa rechtwinklig von der Unterseite 12 der Messerscheibe 1 absteht und zur Abförderung des Schnittgutes aus der Messerkammer 28 vorgesehen ist. Der Räumflügel 17 erstreckt sich über im wesentlichen die gesamte Länge des Befestigungsabschnittes 23 an dessen nachlaufender Längskante 19 und bildet zusammen mit dem Befestigungsabschnitt 23 und dem Reißmesser 20 ein gemeinsames, vorzugsweise ein einteiliges Bauteil.

Dem Häckselmesser 10 sowie dem Reißmesser 20 ist jeweils ein Anschlag 30 bzw. 31 zugeordnet, der mit dem jeweiligen Messer 10, 20 zusammenwirkt, und an einem gehäusefesten Bauteil 26 vorgesehen ist. Wie die Fig. 6 und 7 zeigen, erstreckt sich der dem Häckselmesser 10 zugeordnete Anschlag 31 etwa auf der Höhe der Schnittebene 34 oberhalb der Oberseite 13 der Messerscheibe 1.

Der dem Reißmesser 20 zugeordnete gehäusefeste Anschlag 31 liegt im Umfangsbereich der Messerscheibe 1 ebenfalls oberhalb der Oberseite 13 und wirkt mit der als Frontschneide ausgebildeten vorlaufenden Kante 25 schneidend zusammen. Es kann zweckmäßig sein, einen weiteren dem Reißmesser 20 zugeordneten Anschlag 32 vorzusehen, der sich von dem aufrechten Anschlag 31 oberhalb der Messerscheibe 1 in Umfangsrichtung bis in einen Abschnitt erstreckt, der außerhalb des Außenumfangs der Messerscheibe 1 liegt. Dieser Anschlag 32 kann vorteilhaft mit der als Dachschneide ausgebildeten Dachkante 24 schneidend zusammenwirken.

Die Anschläge 30, 31 und 32 sind an einem gemeinsamen Bauteil 26 ausgebildet, welches Teil eines Einfülltrichters zur Messerkammer 28 ist. Das gehäusefeste Bauteil 26 ist formschlüssig mit dem Gehäusetopf 29 der Messerkammer 28 verbunden, so daß die beim Schnitt auf die Anschläge 30, 31 wirkenden Kräfte vom Gehäusetopf 29 der Messerkammer 28 aufgenommen sind. Der Einfülltrichter 27 bildet so ein mit dem Gehäusetopf 29 kraftübertragend verbundenes Bauteil.

Wie Fig. 6 zeigt, kann mit der zentralen Befestigung 33 der Messerscheibe 1 auf einer Antriebswelle ein zentrales Reißmesser 40 festgelegt sein, dessen Messerenden 41 schräg nach außen unter einem Winkel angestellt vorgesehen sind.

Das zentrale Reißmesser 40 ist durch Drehanschläge 42 der Messerscheibe 1 drehfest auf deren Oberseite 13 gehalten. Die Messerenden 41 können vorteilhaft bis in den Schnittbereich der Häckselmesser 10 ragen.

## Patentansprüche

1. Häcksler zum Zerkleinern von organischem Material, insbesondere Gartenhäcksler für Astwerk, Gestrüpp oder dgl., bestehend aus einer Messerkammer (28) mit einer rotierenden Messerscheibe (1), auf der mindestens ein Häckselmesser (10) befestigt ist, und das Häckselmesser (10) eine sich etwa in Radialrichtung erstreckende Schneide (16) aufweist, wobei das Häckselmesser (10) zum Zerkleinern des Materials mit einem gehäusefesten Anschlag (30) zusammenwirkt,
**dadurch gekennzeichnet, daß** im Bereich des Außenumfangs (6) der Messerscheibe (1) ein Reißmesser (20) angeordnet ist, das nach Art eines Reißzahns ausgebildet ist und das in Umfangsrichtung (11) der Messerscheibe (1) mit Abstand (u) zum Häckselmesser liegt.

2. Häcksler nach Anspruch 1,
**dadurch gekennzeichnet, daß** der Grundkörper (21) des Reißmessers (20) in Umfangsrichtung (11) der Messerscheibe (1) ausgerichtet liegt.

3. Häcksler nach Anspruch 1 oder 2,
**dadurch gekennzeichnet, daß** an einer vorlaufenden Kante (25) des Grundkörpers (21) des Reißmessers (20) eine Frontschneide ausgebildet ist.

4. Häcksler nach einem der Ansprüche 1 bis 3,
**dadurch gekennzeichnet, daß** an einer in Umfangsrichtung (11) sich erstreckenden Dachkante (24) des Grundkörpers (21) des Reißmessers (20) eine Dachschneide ausgebildet ist.

5. Häcksler nach einem der Ansprüche 1 bis 4,
**dadurch gekennzeichnet, daß** das Reißmesser (20) über die Schnittebene (34) des Häckselmessers (10) übersteht.

6. Häcksler nach einem der Ansprüche 1 bis 5,
**dadurch gekennzeichnet, daß** das Reißmesser (10) in einer Umfangsausnehmung (15) der Messerscheibe (1) liegt.

7. Häcksler nach einem der Ansprüche 1 bis 6,
**dadurch gekennzeichnet, daß** sich das Reißmesser (20) von der Unterseite (12) der Messerscheibe (1) über dessen Oberseite (13) hinaus erstreckt.

8. Häcksler nach einem der Ansprüche 1 bis 7,
**dadurch gekennzeichnet, daß** das Reißmesser (20) mit einem sich etwa parallel zur Messerscheibe (1) erstreckenden Befestigungsabschnitt (23) an der Messerscheibe (1) festgelegt ist.

9. Häcksler nach Anspruch 8,
**dadurch gekennzeichnet, daß** sich der Befestigungsabschnitt (23) etwa radial zur Messerscheibe (1) erstreckt.

10. Häcksler nach einem der Ansprüche 1 bis 9,
**dadurch gekennzeichnet, daß** das Reißmesser (20) in einem Bereich der Messerscheibe (1) befestigt ist, in dem die Messerscheibe (1) ein Zusatzblech (15) trägt.

11. Häcksler nach Anspruch 10,
**dadurch gekennzeichnet, daß** das Zusatzblech (14) ein geräuschdämmendes Blech ist.

12. Häcksler nach einem der Ansprüche 1 bis 11,
**dadurch gekennzeichnet, daß** dem Reißmesser (20) ein gehäusefester Anschlag (31, 32) zugeordnet ist.

13. Häcksler nach Anspruch 12,
**dadurch gekennzeichnet, daß** der dem Häckselmesser (10) zugeordnete Anschlag (30) und der dem Reißmesser (20) zugeordnete Anschlag (31, 32) an einem gemeinsamen Bauteil (26) der Messerkammer (28) ausgebildet sind.

14. Häcksler nach Anspruch 13,
**dadurch gekennzeichnet, daß** das Bauteil (26) Teil eines Einfülltrichters (27) zur Messerkammer (28) ist.

15. Häcksler nach Anspruch 8 oder 9,
**dadurch gekennzeichnet, daß** das Reißmesser (20), sein Befestigungsabschnitt (23) und ein Räumflügel (17) ein gemeinsames Bauteil bilden.

16. Häcksler nach Anspruch 15,
**dadurch gekennzeichnet, daß** der Reißzahn (20), sein Befestigungsabschnitt (23) und ein Räumflügel (17) ein einteiliges Bauteil bilden.

## Claims

1. Shredder for chipping organic material, in particular garden shredder for branches, brushwood, etc., consisting of a cutting chamber (28) with a rotating cutting disk (1) to which is fastened at least one shredder blade (10), the shredder blade (10) having an approximately radially extending cutting edge (16) and the shredder blade (10) for chipping the material co-operating with a stop (30) which is fixed to the housing,
**characterised in that**
positioned in the area of the outer periphery (6) of the cutting disk (1) is a tearing blade (20) which is designed in the manner of a tearing tooth and which when measured around the circumference (11) of the cutting disk (1) lies a distance (u) from the shredder blade.

2. Shredder in accordance with claim 1,
**characterised in that**
the basic body (21) of the tearing blade (20) is oriented in line with the circumference (11) of the cutting disk (1).

3. Shredder in accordance with claim 1 or 2,
**characterised in that**
a front cutting edge is formed on a leading edge (25) of the basic body (21) of the tearing blade (20).

4. Shredder in accordance with one of claims 1 to 3,
**characterised in that**
a top cutting edge is formed on a circumferentially (11) extending top edge (24) of the basic body (21) of the tearing blade (21).

5. Shredder in accordance with one of claims 1 to 4,
**characterised in that**
the tearing blade (20) projects beyond the cutting plane (34) of the shredder blade (10).

6. Shredder in accordance with one of claims 1 to 5,
**characterised in that**
the tearing blade (10) lies in a circumferential recess (15) in the cutting disk (1).

7. Shredder in accordance with one of claims 1 to 6,
**characterised in that**
the tearing blade (20) extends from the underside (12) of the cutting disk (1) beyond its upper face (13).

8. Shredder in accordance with one of claims 1 to 7,
**characterised in that**
the tearing blade (20) is fixed to the cutting disk (1) by a fastening section (23) which runs approximately parallel to the cutting disk (1).

9. Shredder in accordance with claim 8,
**characterised in that**
the fastening section (23) extends approximately radially to the cutting disk (1).

10. Shredder in accordance with one of claims 1 to 9,
**characterised in that**
the tearing blade (20) is fixed in an area of the cutting disk (1) in which the cutting disk (1) bears an additional plate (15).

11. Shredder in accordance with claim 10,
**characterised in that**
the additional plate (14) is a noise-reducing plate.

12. Shredder in accordance with one of claims 1 to 11,
**characterised in that**
a stop (31, 32) which is fixed to the housing is associated with the tearing knife (20).

13. Shredder in accordance with claim 12,
**characterised in that**
the stop (30) associated with the shredder blade (10) and the stop (31, 32) associated with the tearing blade (20) are formed on one common component (26) of the blade chamber (28).

14. Shredder in accordance with claim 13,
**characterised in that**
the component (26) is part of a feed chute (27) leading to the blade chamber (28).

15. Shredder in accordance with claim 8 or 9,
**characterised in that**
the tearing blade (20), its fastening section (23) and an evacuating guide (17) form one common component.

16. Shredder in accordance with claim 15,
**characterised in that**
the tearing tooth (20), its fastening section (23) and an evacuating guide (17) form a one-piece component.

## Revendications

1. Broyeur pour broyer des matières organiques, en particulier broyeur pour jardin pour branchages, broussailles et autres, composé d'une chambre de lame (28) avec un disque porte-lame rotatif (1) sur lequel est fixée au moins une lame broyeuse (10), et le disque porte-lame (10) présente une arête de coupe (16) qui s'étend à peu près dans le sens radial, la lame broyeuse (10) coopérant pour broyer les matières avec une butée (30) solidaire du carter,
**caractérisé en ce qu'**il est prévu dans la zone de la circonférence extérieure (6) du disque porte-lame (1) une lame de déchirement (20) qui est conçue à la manière d'une dent de déchirement et qui est disposée à une distance (u) de la lame broyeuse, dans le sens circonférentiel (11) du disque porte-lame (1).

2. Broyeur selon la revendication 1,
**caractérisé en ce que** le corps de base (21) de la lame de déchirement (20) est dirigé dans le sens circonférentiel (11) du disque porte-lame (1).

3. Broyeur selon la revendication 1 ou 2,
**caractérisé en ce qu'**une arête de coupe est formée sur un bord avant (25) du corps de base (21) de la lame de déchirement (20).

4. Broyeur selon l'une des revendications 1 à 3,
**caractérisé en ce qu'**une arête de coupe en forme de toit est formée sur un bord en forme de toit (24) du corps de base (21) de la lame de déchirement (20), lequel bord (24) s'étend dans le sens circonférentiel (11).

5. Broyeur selon l'une des revendications 1 à 4,
**caractérisé en ce que** la lame de déchirement (20) dépasse du plan de coupe (34) de la lame de broyeur (10).

6. Broyeur selon l'une des revendications 1 à 5,
**caractérisé en ce que** la lame de déchirement (10) se trouve dans un creux circonférentiel (15) du disque porte-lame (1).

7. Broyeur selon l'une des revendications 1 à 6,
**caractérisé en ce que** la lame de déchirement (20), à partir de la face inférieure (12) du disque porte-lame (1), s'étend au-delà de la face supérieure (13) de celui-ci.

8. Broyeur selon l'une des revendications 1 à 7,
**caractérisé en ce que** la lame de déchirement (20) est fixée au disque porte-lame (1) avec une partie de fixation (23) qui est à peu près parallèle au disque (1).

9. Broyeur selon la revendication 8,
**caractérisé en ce que** la partie de fixation (23) s'étend à peu près radialement par rapport au disque porte-lame (1).

10. Broyeur selon l'une des revendications 1 à 9,
**caractérisé en ce que** la lame de déchirement (20) est fixée dans une zone du disque porte-lame (1) dans laquelle le disque porte-lame (1) porte une tôle supplémentaire (14).

11. Broyeur selon la revendication 10,
**caractérisé en ce que** la tôle supplémentaire (14) est une tôle insonorisante.

12. Broyeur selon l'une des revendications 1 à 11,
**caractérisé en ce qu'**une butée (31, 32) solidaire du carter est associée à la lame de déchirement (20).

13. Broyeur selon la revendication 12,
**caractérisé en ce que** la butée (30) associée à la lame broyeuse (10) et la butée (31, 32) associée à la lame de déchirement (20) sont formées sur un élément commun (26) de la chambre de lame (28).

14. Broyeur selon la revendication 13,
**caractérisé en ce que** l'élément (26) fait partie d'une trémie de chargement (27) qui mène à la chambre de lame (28).

15. Broyeur selon la revendication 8 ou 9,
**caractérisé en ce que** la lame de déchirement (20), sa partie de fixation (23) et une aile de dégagement (17) forment un élément d'une seule pièce.

16. Broyeur selon la revendication 15,
**caractérisé en ce que** la dent de déchirement (20), sa partie de fixation (23) et une aile de dégagement (17) forment un élément d'une seule pièce.
